# DEMANDE DE BREVET EUROPEEN

(11) **EP 0 898 241 A1**
(43) Date de publication de la demande: **24.02.1999**
(21) Numéro de dépôt: 97114548.7
(22) Date de dépôt: 22.08.1997
(51) Int. Cl.: G06K 11/18

(54) **Souris d'ordinateur de type autonome**

(71) Demandeur: EM Microelectronic-Marin SA, 2074 Marin (CH)
(72) Inventeur: Meusburger, Guenther, 3234 Vinelz (CH)
(74) Mandataire: Balsters, Robert

(57) **Abrégé**

Cette souris d'ordinateur comprend un dispositif capteur de déplacements (6) capable d'engendrer des signaux de mouvement reflétant les mouvements imprimés à la souris par l'utilisateur en particulier les déplacements de la souris dans un plan parallèle à une surface de travail (S) sur laquelle est placée cette souris.

Un circuit de traitement de signaux (12) est connecté au dispositif capteur (6) et capable de traiter les signaux de mouvement pour les adapter à l'utilisation par l'ordinateur, tandis qu'un émetteur (13) assure la communication par faisceau de rayonnement avec l'ordinateur.

Selon l'invention, la source d'énergie (14) alimentant ces éléments comporte un microgénérateur électrique (15) entraîné par suite des mouvements imprimés à la souris. Le mécanisme d'entraînement (16) est de préférence à masse d'inertie rotative excentrée (17).

## Description

La présente invention est relative aux organes de commande des ordinateurs, le plus souvent des ordinateurs dits "domestiques" ou "personnels", qu'ils soient utilisés à titre privé ou commercial. Plus particulièrement, l'invention concerne le dispositif de commande que le langage courant désigne habituellement par le terme "souris", mot qui sera adopté dans la présente description.

Les souris que l'on trouve dans le commerce comportent, la plupart du temps, un boîtier que l'on déplace sur une surface, les amplitudes des mouvements dans un plan parallèle à cette surface étant reproduites sur le moniteur de l'ordinateur par un curseur en tenant compte d'un facteur de proportionnalité déterminé. A cet effet, le boîtier de la souris contient des capteurs de déplacement et un circuit de traitement des signaux fournis par ces capteurs, ce circuit étant relié à l'ordinateur par un câble (d'où le nom de "souris"). Le circuit assure également la transmission par le câble de signaux que l'utilisateur peut engendrer par un ou plusieurs boutons se trouvant sur le boîtier afin de provoquer certaines commandes pour l'ordinateur dont l'opération que l'on nomme communément "cliquer". Enfin, le câble sert à transporter de l'énergie en provenance de l'ordinateur pour alimenter le circuit électronique de la souris.

Plus récemment sont apparues sur le marché des souris, dites "autonomes", conçues de telle façon qu'elles puissent s'affranchir de la liaison par câble à l'ordinateur, ce qui, bien évidemment, apporte un confort d'utilisation supplémentaire pour l'utilisateur. Ces souris communiquent avec l'ordinateur par l'intermédiaire d'un faisceau de rayonnement capable de véhiculer les signaux de commande en superposition sur une porteuse, le faisceau pouvant être hertzien ou optique selon des principes parfaitement connus dans la technique.

Si une telle liaison par faisceau de rayonnement permet effectivement de s'affranchir du câble de liaison, l'utilisateur se voit néanmoins confronté à un autre inconvénient qui réside dans la nécessité de prévoir dans la souris une source d'énergie autonome, l'absence du câble empêchant le transport de l'énergie à partir de l'ordinateur. La source d'énergie autonome utilisée est une pile classique que l'on doit remplacer lorsqu'elle est épuisée. La fin de vie de la pile étant imprévisible, l'utilisateur, outre de devoir remplacer la pile , risque également de devoir interrompre son travail , s'il n'a pas pris la précaution de se procurer à l'avance d'une pile de remplacement.

L'invention a pour but de fournir une souris d'ordinateur de type autonome qui soit dépourvue de ces inconvénients.

L'invention a donc pour objet une souris d'ordinateur de type autonome sans liaison câblé avec l'ordinateur comprenant un dispositif capteur de déplacements capable d'engendrer des signaux de mouvement reflétant les déplacements de la souris, en particulier dans un plan parallèle à une surface de travail sur laquelle est placée cette souris, un circuit de traitement connecté au dispositif capteur et capable de traiter lesdits signaux de mouvement pour les adapter à l'utilisation par ledit ordinateur, un émetteur d'un faisceau de rayonnement raccordé audit circuit de traitement pour assurer la communication de la souris avec l'ordinateur, et une source d'énergie pour alimenter ledit dispositif capteur, ledit circuit de traitement et ledit émetteur, caractérisée en ce que ladite source d'énergie comporte au moins un microgénérateur électrique entraîné par les mouvements imprimés à ladite souris.

Grâce à ces caractéristiques, la souris produit son propre énergie en profitant de chaque mouvement qui lui est imposé par l'utilisateur pour engendrer les signaux de commande à destination de l'ordinateur.

Suivant un premier mode de réalisation de l'invention, ladite source d'énergie comporte un mécanisme d'entraînement à masse d'inertie rotative excentrée, ce mécanisme étant couplé audit microgénérateur.

Suivant un second mode de réalisation de l'invention, applicable plus particulièrement dans le cas où la souris est du type comprenant un boîtier dans lequel est montée rotative une bille destinée à rouler sur ladite surface de travail, ladite bille étant suspendue dans trois supports comprenant chacun un rouleau en contact de frottement avec ladite bille et monté rotatif sur un axe dans ledit support, ledit microgénérateur électrique est monté sur au moins l'un desdits axes.

D'autres caractéristiques et avantages de l'invention apparaîtront au cours de la description qui va suivre, donnée uniquement à titre d'exemple et faite en se référant aux dessins annexés sur lesquels :
- la figure 1 est une vue schématique en perspective éclatée d'une souris autonome selon un premier mode de réalisation de l'invention;
- la figure 2 est une vue en plan d'une souris autonome selon un second mode de réalisation de l'invention, le couvercle du boîtier de la souris étant enlevé.

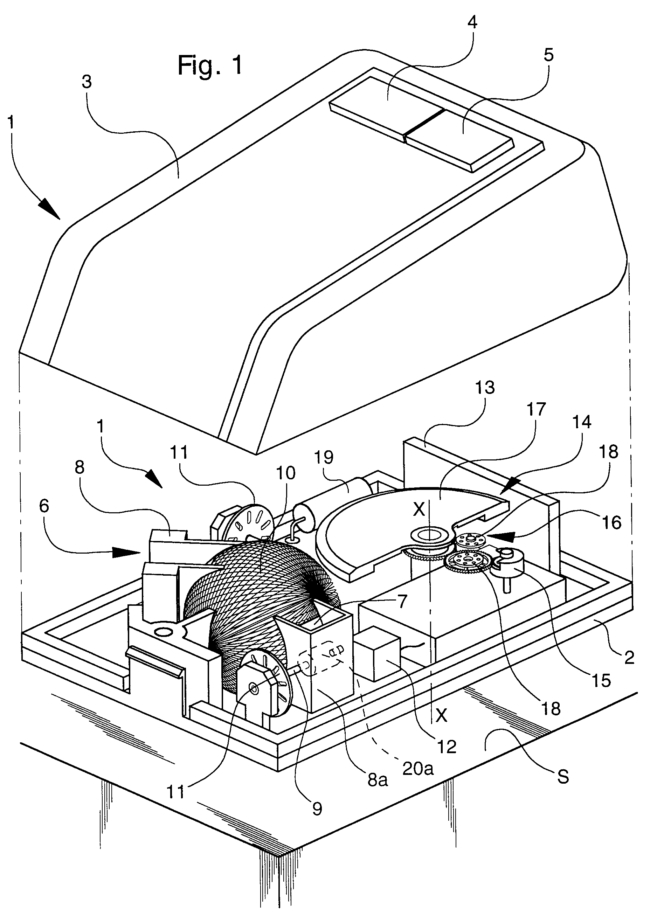

Selon le premier mode de réalisation représenté sur la figure 1, la souris autonome pour ordinateur selon l'invention comprend un boîtier 1 formé d'un fond 2 recevant les composants principaux de la souris et un couvercle 3 qui peut être clipsé sur le fond. On notera que le couvercle comporte des boutons de commande 4 et 5 habituels permettant d'assurer notamment la commande que l'on désigne par "cliquer".

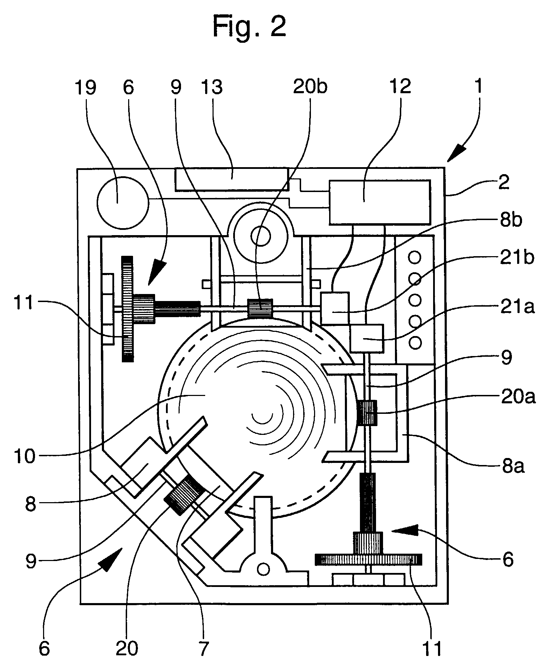

Comme cela est bien connu, la souris comprend un dispositif capteur 6 permettant de déceler ses mouvements parallèlement au plan de la surface de travail S sur lequel le fond est placé. Ce dispositif capteur 6 comprend une bille 7 suspendue dans le fond 2 et dépassant d'un orifice du fond 2 (non visible) de manière à pouvoir rouler sur la surface de travail S. A cet effet, la bille 7 est montée mobile dans des supports 8, 8a, 8b. Chacun de ces supports comporte notamment un axe horizontal 9 (l'un de ces axes est visible sur la figure 1) sur lequel est monté un petit rouleau 20, 20a, 20b (voir la figure 2) qui est en contact de frottement avec la bille 7. Un des supports, le support de poussée 8 pousse la surface de la bille contre les surfaces des rouleaux 20a, 20b. Les rouleaux 20a, 20b sont donc entraînés en rotation autour de leur axes, lorsque la bille est entraînée en rotation par suite d'un déplacement de la souris sur la surface de travail S. Dans l'exemple représenté, la bille est couverte d'un dôme 10 venu de matière avec le fond 2. Le dôme 10 présente à cet effet trois ouvertures, non références, positionnés devant les rouleaux 20, 20a, 20b de telle sorte qu'une partie des pourtour de ces rouleaux s'étend à l'intérieur du dôme 10.

Deux des supports 8a, 8b sont placés de telle manière que leurs axes 9 s'étendent perpendiculairement l'un à l'autre. Ces axes portent chacun une roue de codage 11 coopérant avec un senseur opto-électronique (non représenté) capable d'engendrer des signaux de mouvement angulaire autour des axes respectifs 9. Dès lors, on comprend que les déplacements de la souris sur la surface S engendrent des signaux de mouvement qui vont être exploités par l'ordinateur, notamment pour la commande d'un curseur sur un écran moniteur.

La souris autonome comporte, également de façon classique, un circuit de traitement symbolisé globalement par le bloc 12 et qui est connecté à un émetteur de rayonnement 13, d'un faisceau de rayonnement, optique ou hertzien par exemple, capable d'adapter, respectivement de transmettre les signaux de mouvement vers l'ordinateur en étant superposés sur ce faisceau de rayonnement utilisé comme porteuse.

La souris autonome comprend également une source d'énergie 14 destinée à fournir l'énergie nécessaire au dispositif capteur 6, au circuit de traitement 12 et à l'émetteur de rayonnement 13. Selon l'invention, cette source d'énergie comprend un microgénérateur électrique 15, à courant continu ou à courant alternatif, monté fixe sur le fond 2 et destiné à être entraîné par un mécanisme d'entraînement 16 à masse rotative excentrée 17. On notera que l'axe X-X de rotation de cette masse excentrée 17 est montée de manière à être perpendiculaire à la surface de travail S. La masse rotative excentrée 17 est couplée au microgénérateur 15 par l'intermédiaire d'un mécanisme de couplage 18, de préférence de type bidirectionnel, et capable de transmettre les mouvements de rotation dans les deux sens de la masse excentrée 17, au microgénérateur 15 alors que celui-ci ne doit tourner que dans un seul sens. Le microgénérateur 15 est connecté à un accumulateur 19 par l'intermédiaire duquel il est connecté au circuit 12 et à l'émetteur 13.

La source d'énergie 14 utilisée pour l'invention est connue en soi. On peut trouver une description d'un exemple d'une telle source d'énergie dans le brevet Européen n° EP 0 547 083 et on peut s'en procurer auprès de la Société ETA SA à CH-Granges qui fabrique des mouvements d'horlogerie contenant la source ainsi que son circuit de gestion associé sous l'appellation "calibre 205". L'accumulateur 19 peut être un condensateur de très grande capacité (0,33 Farad) fabriqué sous le vocable "GOLDCAP" par la Société MATSHUSHITA.

L'axe de rotation X-X de la masse excentrée 17 étant perpendiculaire à la surface de travail S, cette masse réagira à tous les déplacements de la souris effectués par l'utilisateur pendant le fonctionnement de l'ordinateur. Il s'avère que ces mouvements sont amplement suffisants pour conserver une charge sur l'accumulateur 19 capable d'alimenter le circuit 12, le dispositif capteur 6 et l'émetteur 13, même si le taux d'utilisation de la souris est faible comparée à la durée d'utilisation totale de l'ordinateur.

On remarquera que le premier mode de réalisation qui vient d'être décrit est applicable quelle que soit la construction du dispositif capteur 6 utilisé.

La figure 2 représente un autre mode de réalisation de l'invention, des éléments analogues utilisés dans le mode de réalisation de la figure 1 étant ici désignés par les mêmes références. On notera que, sur cette figure 2, on aperçoit en plus les rouleaux 20, 20a, 20b portés par les axes 9 et en contact de frottement avec la bille 7.

Conformément à ce second mode de réalisation, chacun des axes 9 des supports 8a, 8b est couplé à un microgénérateur 21a, 21b monté fixe sur le fond 2 du boîtier 1. Ces microgénérateurs sont donc entraînés chaque fois que la souris est amenée à effectuer un déplacement. Les microgénérateurs 21a et 21b sont de préférence raccordés en parallèle. Bien entendu, si la puissance nominale nécessaire pour alimenter la souris le permet, on peut n'en prévoir qu'un seul sur l'un ou l'autre de ces axes 9.

Il est expressément précisé que l'invention englobe également les souris dont le boîtier reste immobile, mais qui comportent un organe mobile par rapport au boîtier et dont le dispositif capteur détecte les mouvements, les déplacements de cet organe mobile (une boule que l'on fait tourner dans le boîtier par le pouce par exemple) provoquant la production de signaux de mouvement capables de commander les déplacements d'un curseur sur l'écran d'un moniteur. Dans ce cas, le microgénérateur peut être entraîné par l'intermédiaire d'un mécanisme d'entraînement sensible aux mouvements de cet organe mobile.

## Revendications

1. Souris d'ordinateur du type autonome sans liaison câblé avec l'ordinateur comprenant un dispositif capteur de déplacements (6) capable d'engendrer des signaux de mouvement reflétant les déplacements de la souris, en particulier dans un plan parallèle à une surface de travail (S) sur laquelle est placée cette souris, un circuit de traitement (12) connecté au dispositif capteur (6) et capable de traiter lesdits signaux de mouvement pour les adapter à l'utilisation par ledit ordinateur, un émetteur (13) d'un faisceau de rayonnement raccordé audit circuit de traitement (12) pour assurer la communication de la souris avec l'ordinateur, et une source d'énergie (14) pour alimenter ledit dispositif capteur (6), ledit circuit de traitement (12) et ledit émetteur (13), caractérisée en ce que ladite source d'énergie (14) comporte au moins un microgénérateur électrique (15; 21a, 21b)entraîné par suite des mouvements imprimés à ladite souris.

2. Souris suivant la revendication 1, caractérisée en ce que ladite source d'énergie (14) comporte un mécanisme d'entraînement (16) à masse d'inertie rotative excentrée (17), ce mécanisme étant couplé audit microgénérateur (15).

3. Souris suivant la revendication 2, caractérisée en ce que l'axe de rotation (X-X) de ladite masse d'inertie rotative excentrée (17) est orientée de manière à être perpendiculaire à ladite surface de travail (S), lorsque ladite souris est en position d'utilisation.

4. Souris suivant l'une quelconque des revendications 2 et 3, caractérisée en ce que ladite masse d'inertie rotative excentrée (17) est couplée audit microgénérateur (15) par l'intermédiaire d'un mécanisme de couplage bidirectionnel (18).

5. Souris suivant la revendication 1, caractérisée en ce qu'elle est du type comprenant un boîtier (1) dans lequel est montée rotative une bille (7) destinée à rouler sur ladite surface de travail (S), ladite bille étant suspendue dans trois supports (8, 8a, 8b) comprenant chacun un rouleau (20, 20a, 20b) en contact de frottement avec ladite bille (7) et monté rotatif sur un axe (9) dans ledit support (8, 8a, 8b), et en ce qu'un microgénérateur électrique (21a, 21b) est monté sur au moins l'un desdits axes (9).

6. Souris suivant l'une quelconque des revendications précédentes, caractérisée en ce que ladite source d'énergie (14) comporte également un accumulateur d'énergie électrique (19) connecté audit microgénérateur (15; 21a, 21b).
